# EUROPÄISCHE PATENTSCHRIFT

(11) **EP 0 913 415 B1**
(45) Veröffentlichungstag und Bekanntmachung des Hinweises auf die Patenterteilung: **29.09.2004**
(21) Anmeldenummer: 98120124.7
(22) Anmeldetag: 26.10.1998
(51) Int. Cl.: C08G 18/32, C08G 18/66

(54) **Polyurethane mit Kohlenhydratbausteinen**
Polyurethanes with carbohydrate components
Polyuréthanes à base d'hydrates de carbone

(30) Priorität: 31.10.1997 DE 19748210
(43) Veröffentlichungstag der Anmeldung: 06.05.1999
(73) Patentinhaber: SÜDZUCKER AKTIENGESELLSCHAFT MANNHEIM/OCHSENFURT, 68165 Mannheim (DE); Klebchemie M.G. Becker GmbH & Co. KG, 76356 Weingarten/Baden (DE); Küster, Jörn Dr., 74047 Heilbronn (DE)
(72) Erfinder: Begli, Alireza Haji Dr., 67305 Ramsen (DE); Keller, Günter, 74199 Donnbronn (DE); Kowalczyk, Jörg Dr., 67248 Bockenheim (DE); Küster, Jörn Dr., 74047 Heilbronn (DE); Kunz, Markwart Dr., 67550 Worms (DE)
(74) Vertreter: Schrell, Andreas, Dr.

(56) Entgegenhaltungen:
- EP-A- 0 062 784
- DE-A- 19 619 216
- FR-A- 2 283 203
- US-A- 4 654 375

## Beschreibung

Die Erfindung betrifft ein Verfahren zur Herstellung von Polyurethanen, die mittels dieser Verfahren hergestellten Polyurethane sowie die diese Polyurethane enthaltenden Produkte.

Polyurethane sind vielseitig einsetzbare Kunststoffe. Sie sind durch Polyaddition von Di- oder Polyisocyanaten (sog. B-Komponente) mit Verbindungen, die mindestens zwei reaktive Wasserstoffatome ent- . halten, herstellbar. Dazu gehören Verbindungen, welche Hydroxyl- oder Aminogruppen enthalten. Dies können Diole oder Diamine, aber auch Polyole oder Polyamine bzw. sonstige mit Hydroxyl- bzw. Aminogruppen substituierte Polymere, insbesondere Polyesterpolyole sein. Diese Verbindungen werden üblicherweise zusammen mit Additiven wie Wasser, Katalysatoren, Stabilisatoren, Treibmitteln und/oder Flammschutzmitteln gemischt. Die jeweilige Mischung wird als A-Komponente bezeichnet.

In Abhängigkeit von den in der A- und B-Komponente eingesetzten Verbindungen und dem Mengenverhältnis zwischen A- und B-Komponente variiert die Struktur des resultierenden Polymers. Daher umfaßt der Begriff Polyurethane Kunststoffe, deren Polymerrückgrat Urethan-, Harnstoff-, Allophanat-, Biuret-, Isocyanurat- und Carbodiimid-Gruppen enthält.

Zur Erfüllung der Brandschutzanforderungen, z.B. nach DIN 4102 B1/B2, müssen Polyurethane Flammschutzmittel enthalten. Die gängigen Flammschutzmittel sind im wesentlichen spezielle anorganische Verbindungen, halogenierte organische Verbindungen sowie ggf. halogenierte organische Phosphorverbindungen. Gängige Beispiele sind Dibromneopentylglykol, Ammoniumpolyphosphat, Dimethylmethylphosphonat oder Melamin.

Ein gravierender Nachteil dabei ist, daß diese Substanzen Reizstoffe oder gar toxische Stoffe sind. Bei einem Brand entwickeln sich insbesondere aus halogenhaltigen Verbindungen ätzende und giftige Dämpfe. Außerdem beeinträchtigen die nichtreaktiven Flammschutzmittel die physikalischen Eigenschaften der Polyurethane, so daß die Zugabe ad-äquater Mengen Probleme bereitet.

Es ist schon lange bekannt, daß durch den Einbau von Stärke in das Polymer Polyurethane mit verbesserten Eigenschaften, insbesondere betreffend die Härte und die Entflammbarkeit, erhältlich sind. Es ist auch bekannt, daß Stärke flammhemmend wirkt bzw. die Wirkung der gängigen Flammschutzmittel synergistisch verstärkt. Problematisch ist jedoch, daß unmodifizierte Stärke sich nur schlecht verarbeiten läßt. Es wird daher üblicherweise modifizierte Stärke eingesetzt.

Aus der DE-AS 1 176 358 ist ein Verfahren zur Herstellung von Polyurethanen aus Diisocyanaten mit polyalkoxylierten Polyhydroxylverbindungen, nämlich polyalkoxylierte Saccharose, als A-Komponente bekannt.

Aus den DE 195 46 367 A1 und DE 195 46 371 A1 sind Verfahren zur Herstellung von Isocyanat-Prepolymer-Mischungen bekannt, die wiederum zur Herstellung von Polyurethanen verwendet werden können. Dabei werden zunächst Diisocyanat und teilweise abgebaute native Stärke sowie Polyhydroxyle zu einer Prepolymer-Mischung umgesetzt, die dann weiterverarbeitet wird.

Nachteilig daran ist die aufwendige Verarbeitung der Stärke, die immer mindestens einen zusätzlichen Verfahrensschritt (Modifizierung, Herstellung von Prepolymeren) erfordert.

Aus der WO 83/02120 ist es allerdings bekannt, unmodifizierte Kohlenhydrate zur Herstellung von Polyurethanschäumen einzusetzen. Diese Druckschrift beschreibt den vollständigen Ersatz der synthetischen Polyol-Komponente durch ein Kohlenhydrat. Die beschriebenen Polyurethanschäume werden durch Reaktion einer Polyisocyanat-Komponente mit einem Kohlenhydrat in wäßrigem Medium hergestellt. Als nachteilig erweist sich, daß durch die Anwesenheit von Wasser während der Reaktion nur zellige Polyurethane erhalten werden können, da ein durch das Wasser bedingtes Aufschäumen während der Reaktion auftritt. Zudem liegt keine homogene Verteilung des eingesetzten Kohlenhydrats im hergestellten Polyurethanschaum vor.

Auch das US-Patent 4,291,129 beschreibt die Herstellung von Polyurethanschäumen, wobei eine Polyisocyanat-Komponente mit einem Polyol und einer wäßrigen Lösung eines Kohlenhydrats in Verbindung gebracht wird. Auch hier erweist sich als nachteilig, daß nicht-zellige oder mikrozelluläre Polyurethane aufgrund des stattfindenden Aufschäumens während der Reaktion nicht hergestellt werden können und daß keine gleichmäßige Verteilung des Kohlenhydrats im Polyurethan stattfinden kann.

Der Erfindung liegt daher das technische Problem zugrunde, ein Verfahren zur Herstellung von Polyurethanen bereitzustellen, das die vorgenannten Nachteile überwindet, insbesondere zu einem Produkt führt, bei dem die meist teuere Polyolkomponente und/oder das gegebenenfalls eingesetzte meist giftige Flammschutzmittel zumindest teilweise durch ein leicht erhältliches, ungiftiges Kohlenhydrat ersetzt wird, und wobei das Kohlenhydrat homogen in dem erhaltenen Polyurethan verteilt wird.

Der Erfindung liegt auch das technische Problem zugrunde, Polyurethane und daraus hergestellte Produkte bereitzustellen, die aufgrund des in ihnen enthaltenen unmodifizierten Kohlenhydrats und seiner homogenen Verteilung verbesserte Eigenschaften aufweisen und zudem billiger erhältlich sind.

Die Lösung dieses technischen Problems wird durch die Lehre gemäß des Hauptanspruchs und die dadurch hergestellten Polyurethane sowie die diese Polyurethane enthaltenden Produkte bereitgestellt.

Insbesondere betrifft die Erfindung ein Verfahren zur Herstellung eines Polyurethans aus einer Polyol-Komponente, einer Isocyanat-Komponente und einer Kohlenhydratkomponente, wobei die Kohlenhydratkomponente in eine fein vermahlene Form mit einer durchschnittlichen Korngröße von <50µm, besonders bevorzugt <30µm, überführt, die Kohlenhydratkomponente unter Bildung einer Suspension in eine Trägerkomponente eingebracht und anschließend mit den übrigen Komponenten zur Herstellung des Polyurethans vermischt wird. In bevorzugter Ausführungsform weisen 100 % der vermahlenen Körner eine Korngröße von <30µm, insbesondere <15µm auf. In einer besonders bevorzugten Ausführungsform betrifft die Erfindung ein vorgenanntes Verfahren, wobei die Trägerkomponente ein organisches Medium ist, insbesondere ein flüssiges organisches Medium, welches Bestandteil der Rohformulierung ist beziehungsweise mehrere Komponenten der Rohformulierung zur HerStellung des Polyurethans enthält. In besonders vorteilhafter Weise betrifft die Erfindung ein vorgenanntes Verfahren, wobei in dem Verfahren zur Herstellung eines Polyurethans, vorzugsweise der Polyol-Komponente, zusätzlich ein Flammschutzmittel zugegeben wird. Die vorliegende Erfindung zeichnet sich auch dadurch aus, daß keine Vorreaktion zwischen Polyol-Komponente und Kohlenhydratkomponente stattfindet. Eine vorherige chemische Derivatisierung, Modifikation oder Vorverarbeitung der Kohlenhydratkomponente findet in bevorzugter Ausführungsform nicht statt. Die erfindungsgemäße Umsetzung der Kohlenhydratkomponente mit der Polyol-Komponente findet in bevorzugter Ausführungsform unter atmosphärischem Druck, das heißt nicht unter Vakuum beziehungsweise nicht unter erheblich reduziertem Druck statt, wobei vorzugsweise Raumtemperatur eingehalten wird.

Die Erfindung weist gemäß den obenbeschriebenen Ausführungsformen insbesondere den Vorteil auf, daß die eingesetzte Kohlenhydratkomponente, die in besonders bevorzugter Weise unmodifiziert vorliegt, das heißt direkt aus natürlichen Quellen gewonnen werden kann, die vielfach teueren und giftigen organischen Komponenten, insbesondere die Polyol-Komponente und das Flammschutzmittel zumindest teilweise ersetzen. Die eingesetzten Mengen an Polyol-Komponente und/oder Flammschutzmittel können aufgrund der erfindungsgemäßen Verfahrensweise erheblich reduziert werden, was zu einer Verbilligung des erhaltenen Produktes führt. Aufgrund der erfindungsgemäß vorgesehenen Verfahrensweise, die ein besonders feines Vermahlen der Kohlenhydratkomponente und vorzugsweise das Einbringen der Kohlenhydratkomponente in ein vorzugsweise flüssiges organisches Medium vorsieht, kann eine besonders homogene Verteilung des Kohlenhydrats im erhaltenen Polyurethan erreicht werden, wobei das Kohlenhydrat im erhaltenen Polyurethan teilweise eingekapselt, teilweise aber auch in gebundener Form vorliegt. Die erfindungsgemäß vorgesehene Verwendung einer Kohlenhydrat-Komponente, insbesondere von Saccharose, zur Herstellung von Polyurethanen, insbesondere Polyurethanhartschäumen in Gegenwart von insbesondere phosphorhaltigen Flammschutzmitteln, ermöglicht eine drastische Verminderung der zur Erfüllung der Brandnormen, zum Beispiel DIN 4102 B1 und B2, erforderlichen Flammschutzmittel. Die Verwendung der erfindungsgemäß einzusetzenden Kohlenhydrat-Komponenten ersetzt so teuere teils giftige, teils gesundheitsschädliche Flammschutzmittel, verbessert den Langzeit-Flammschutz und führt im Vergleich zum Einsatz erheblich größerer Mengen konventioneller Flammschutzmittel zu deutlich verbesserten physikalischen Eigenschaften der erhaltenen Produkte. Die feinvermahlene Kohlenhydrat-Komponente wird in Gegenwart von phosphorhaltigen Flammschutzmitteln, wie zum Beispiel chlorierten und unchlorierten Phosphatestern, rotem Phosphor, im Brandfall dehydratisiert und bildet eine den Schaumstoff schützende Kohlenschicht. Die nach dem erfindungsgemäßen Verfahren feinvermahlene Kohlenhydratschicht führt aufgrund ihrer sehr großen spezifischen Oberfläche zu einer sehr schnellen Ausbildung der Verkohlung und schützt so ausgesprochen gut. Einer der wesentlichen Gesichtspunkte dabei ist, daß die Kohlenhydrat-Komponente nicht vollständig in die Polyurethanmatrix eingebaut wird, sondern vielmehr auch gekapselt im Produkt vorliegt.
Aufgrund der erfindungsgemäß vorgesehenen Vorgehensweise, die Kohlenhydratkomponente nicht in wäßriger Phase, sondern in Form einer Suspension in einem flüssigen organischen Medium einzubringen, ergibt sich der weitere Vorteil, daß in diesem Verfahrensstadium kein beziehungsweise nur wenig Wasser in die Reaktionsmischung eingetragen wird, so daß ein in bestimmten Ausführungsformen unerwünschtes Aufschäumen sowie eine Hydrolyse der Polyol-Komponente vermieden und der Harnstoffgehalt im erhaltenen Produkt reduziert wird. Es ergibt sich schließlich der weitere Vorteil, daß aufgrund der Möglichkeit, im erfindungsgemäßen Verfahren auf den Einsatz von Wasser zu verzichten, nicht-zellige oder mikrozelluläre Polyurethane erhalten werden können, die Kohlenhydrate, vorzugsweise in unmodifizierter Form, in homogener Verteilung enthalten. Derartige nicht-zellige oder mikrozelluläre Polyurethane sind bisher nicht bekannt.

In einer besonders bevorzugten Ausführungsform der Erfindung wird als Kohlenhydratkomponente Glucose, Fructose, Puderzucker, Saccharose, Inulin, Stärke, ein Zuckeralkohol, Sorbit, abgebaute Cellulose oder ähnliches eingesetzt. In einer besonders bevorzugten Ausführungsform der Erfindung wird ein auch als Isomalt oder Palatinit® bekanntes nahezu äquimolares Gemisch aus 1,1-GPM (1-O-α-D-Glucopyranosyl-Dmannit) und 1,6-GPS (6-O-α-D-Glucopyranosyl-Dsorbit) als Kohlenhydratkomponente eingesetzt. In einer weiteren bevorzugten Ausführungsform wird als Kohlenhydratkomponente ein Gemisch aus 1,6-GPS, 1,1-GPM und 1,1-GPS (1-O-α-D-Glucopyranosyl-Dsorbit) eingesetzt, welches gegebenenfalls zusätzlich Mannit, Sorbit und/oder Oligomere enthält. Ein derartiges Gemisch ist beispielsweise in der EP 0 625 578 B1 beschrieben. Die Mengenverhältnisse von 1,1-GPM zu 1,6-GPS beziehungsweise von 1,1-GPM zu 1,1-GPS zu 1,6-GPS können aber je nach Anwendungszweck gewählt werden, beispielsweise können 1,1-GPM angereicherte oder 1,6-GPS angereicherte Gemische gemäß der DE 195 323 96 C2 verwendet werden.

Als erfindungsgemäß geeignete Kohlenhydrat-Komponente sind insbesondere Oligosaccharide und/oder Polysaccharide mit reduziertem Molekulargewicht, insbesondere teilweise abgebaute natürliche Polysaccharide, z. B. aus nativen Stärken, bevorzugt. Teilweise abgebaute Stärken sind kommerziell kostengünstig verfügbar und werden auf einfache Art und Weise über sauren oder enzymatischen Abbau aus nativen Stärken gewonnen. Der Abbaugrad wird im allgemeinem durch den Dextrose-Äquivalentwert (DE-Wert) beschrieben, wobei vollständig zu Dextrose abgebaute Stärke einen DE-Wert von 100 besitzt. Unter dem DE-Wert versteht man den prozentualen Gehalt an reduzierenden Zuckern berechnet als D-Glucose in der Trockensubstanz. Während native Stärken im Molekulargewichtsbereichs 10⁵ bis 10⁸ liegen, entspricht ein DE-Wert von 20 einem Molekulargewicht von 10² bis 10⁵ . Bevorzugt sind aus nativen Stärken gewonnene Oligosaccharide mit Dextrose-Äquivalentwerten von 5 bis 50 insbesondere von 10 bis 30.

In einer weiteren Ausführungsform der Erfindung können die Kohlenhydratkomponenten in Form eines wasserreduzierten Fondants verwendet werden.

In einer weiteren bevorzugten Ausführungsform sieht die Erfindung insbesondere vor, daß 5 bis 35 Gewichtsprozent der Komponente A, das heißt der Polyol-Komponente plus eventueller Zusatzkomponenten, und/oder 10 bis 70 Gewichtsprozent des Flammschutzmittels durch die erfindungsgemäß einzusetzende Kohlenhydratkomponente ersetzt werden. Dabei wird die Köhlenhydratkomponente in vorteilhafter Weise direkt in trockener, pulverförmiger oder teilweise in organischen Komponenten gelöst beziehungsweise suspendierter Form in die Formulierung zur Herstellung des Polyurethans eingebracht. Eine vorherige chemische Derivatisierung oder Vorverarbeitung ist nicht nötig.

Gemäß einer Ausführungsform der Erfindung wird die Kohlenhydratkomponente zur Herstellung der feinvermahlenen Form vor Vermischen mit den weiteren Komponenten zur Herstellung des Polyurethans trocken vermahlen. Die trockene Vermahlung kann in dafür geeigneten Mühlen, zum Beispiel Sichtermühlen, unter dafür eingestellten Konditionierungsbedingungen beziehungsweise unter Zusatz von Anticaking-Mitteln, wie zum Beispiel Calciumphosphat, Calciumhydrogensulfat, Maltodextrinen, Isomalt und dergleichen erfolgen. Es ist auch möglich, die Feinanteile durch Sichten (Windsichten) von zum Beispiel konditioniertem Puderzucker, eventuell unter Zugabe von Anticaking-Mitteln, von den unerwünschten Restanteilen abzutrennen und diese Feinfraktion für die Herstellung der Formulierung zu verwenden. Die so fein vermahlene Kohlenhydratkomponente wird in einer vorteilhaften Ausgestaltung der Erfindung in einer oder mehreren flüssigen Bestandteilen, das heißt insbesondere einem oder mehreren flüssigen organischen Medien, zum Beispiel der Polyol-Komponente, dem Flammschutzmittel oder/und der Isocyanat-Komponente suspendiert. Unter Zugabe der weiteren für die Polyurethan-Herstellung erwünschten oder notwendigen Zusatzstoffe wird die fertige Formulierung, also die Reaktionsmischung, gemischt. Die Homogenisierung erfolgt bevorzugt mit Dispensern, wobei Zusätze, die auch bereits bei der Vermahlung eingesetzt werden können, zur Stabilisierung der Dispersion noch beitragen können.

Ein weiterer, erfindungsgemäß vorteilhafter Weg zur Herstellung der fein vermahlenen Kohlenhydratkomponente und zum Einbringen in eine Suspension der Trägerkomponente, das heißt vorteilhafterweise des flüssigen organischen Mediums, kann durch Naßvermahlung erfolgen, zum Beispiel in einem oder mehreren flüssigen Bestandteilen der Polyol- oder Isocyanat-Komponente oder dem Flammschutzmittel. Insbesondere kann die Kohlenhydratkomponente in einem Polyetherpolyol, einem Polyesterpolyol, Glykol, einem Flammschutzmittel, einem physikalischen Treibmittel oder in einem bezüglich Isocyanat nicht reaktivem Trägermittel dispergiert werden, wobei zur Verbesserung der Benetzung weiterhin Tenside, Schaumstabilisatoren sowie Dispergiermittel wie zum Beispiel pyrogene Kieselsäure zugegeben werden können. Die so hergestellten Dispersionen mit einem Kohlenhydratgehalt von 10 bis 70 Gewichtsprozent, bevorzugt von zirka 50 Gewichtsprozent, werden mit Hilfe einer Kugel- beziehungsweise Perlmühle im Naßmahlverfahren auf die erforderliche Korngröße von <50µm, vorzugsweise <30µm, vermahlen. Zu dieser Kohlenhydrat-Dispersion werden dann die noch notwendigen Komponenten wie zum Beispiel Polyether-, Polyesterpolyole, Stabilisatoren, Katalysatoren, Wasser und/oder Treibmittel dazugemischt.

Aufgrund der erfindungsgemäß vorgesehenen kleinen Korngröße wird eine sehr homogene Verteilung der Kohlenhydrat-Komponente im Reaktionsgemisch (A- und B-Komponente) und damit im ausreagierten Polyurethan, beispielsweise einem Hart- oder Weichschaum, mikrozellulären Schaum, Elastomer oder Gießharz erreicht. Die Wechselwirkungsfläche für chemische Vernetzung beziehungsweise physikalische Wechselwirkungen wie zum Beispiel Wasserstoffbrückenbindungen oder van der Waals-Kräfte der OH-Gruppen ist im Vergleich zu größeren Kohlenhydratpartikeln drastisch erhöht und führt zu einer Verbesserung der physikalischen Werte. Der oft für Polyurethanschäume beobachtete Verlust der mechanischen Werte bei Beimengung von Feststoffen, zum Beispiel gekapseltem rotem Phosphor, tritt erfindungsgemäß nicht auf. Der ausgeprägte Synergismus mit insbesondere flüssigen phosphorhaltigen Flammschutzmitteln ist ebenfalls auf die sehr feine erfindungsgemäß vorgesehene Korngröße zurückzuführen. Die feine Vermahlung bis auf Korngrößen <50 µm führt zudem im Viskositätsbereich der organischen Trägerkomponente ab zirka 1000 mPas zu Dispersionen, die tagelang stabil sind. Die kohlenhydrathaltigen Komponenten A und B sind auf allen herkömmlichen Hoch- und Niederdruckmaschinen zur Herstellung von Polyurethanen einsetzbar.

Die Erfindung sieht auch vor, daß der Polyol-Komponente, wie bereits erwähnt, weitere Komponenten wie Schaumstabilisatoren, insbesondere auf Polysiloxanbasis, Wasser, Treibmittel, Katalysatoren Kettenverlängerungs- und/oder Vernetzungsmittel und/oder oberflächenaktive Mittel zur Herstellung der sogenannten A-Komponente hinzugegeben werden. Zudem können, wie bereits erläutert, in bevorzugter Weise herkömmliche Flammschutzmittel in die Polyol-Komponente eingebracht werden, deren Anteil durch die Verwendung der erfindungsgemäß einzusetzenden Kohlenhydratkomponente mit ihrer flammhemmenden Wirkung erheblich reduziert werden kann.

Im Zusammenhang mit der vorliegenden Erfindung wird unter der Polyol-Komponente eine hydroxylgruppehaltige Verbindung verstanden.

Derartig geeignete Polyhydroxylverbindungen weisen vorteilhafterweise eine Funktionalität von 2 bis 8 und eine Hydroxylzahl von 25 bis 1800 auf und bestehen vorzugsweise aus Polyhydroxylverbindungen, die insbesondere ausgewählt sind aus der Gruppe der Polythioetherpolyole, Polyesteramide, hydroxylgruppenhaltigen Polyacetale, hydroxylgruppenhaltigen aliphatischen Polycarbonate, Polyesterpolyole, polymermodifizierten Polyetherpolyole, vorzugsweise Polyetherpolyole und Mischungen aus mindestens zwei der genannten Polyhydroxylverbindungen.

Zur Herstellung von flexiblen PU(Polyurethan)-Schaumstoffen werden erfindungsgemäß Polyhydroxylverbindungen, mit einer Funktionalität von vorzugsweise 2 bis 3 und einer Hydroxylzahl von vorzugsweise 30 bis 80 und zur Herstellung von harten PU-Schaumstoffen Polyhydroxylverbindungen, mit einer Funktionalität von 3 bis 8 und insbesondere 3 bis 6 und einer Hydroxylzahl von vorzugsweise 100 bis 500 bevorzugt.

Als Polyhydroxylverbindungen werden vorzugsweise lineare und/oder verzweigte Polyesterpolyole und insbesondere lineare und/oder verzweigte Polyoxyalkylenpolyole verwendet, wobei Polyhydroxylverbindungen aus nachwachsenden Rohstoffen und/oder chemisch modifizierten nachwachsenden Rohstoffen insbesondere bevorzugt sind.

Erfindungsgemäß werden auch als Polyhydroxylverbindungen polymermodifizierte Polyoxyalkylenpolyole, Polyoxyalkylenpolyoldispersionen und andere hydroxylgruppenhaltige Polymere und Polykondensate mit den vorgenannten Funktionalitäten und Hydroxylzahlen eingesetzt, beispielsweise Polyesteramide, Polyacetale und/oder Polycarbonate, insbesondere solche, die aus Diphenylcarbonat und Hexandiol-1,6 durch Umesterung hergestellt sind, oder Mischungen aus mindestens zwei der genannten höhermolekularen Polyhydroxylverbindungen.

Erfindungsgemäß bevorzugte Polyesterpolyole werden insbesondere aus organischen Dicarbonsäuren mit 2 bis 12 Kohlenstoffatomen vorzugsweise aliphatische Dicarbonsäuren mit 4 bis 6 Kohlenstoffatomen und mehrwertigen Alkoholen vorzugsweise Alkandiolen mit 2 bis 12 Kohlenstoffatomen, vorzugsweise 2 bis 6 Kohlenstoffatomen, Dialkylenglykolen und/oder Alkantriolen mit 3 bis 6 Kohlenstoffatomen hergestellt. Erfindungsgemäß eingesetzte Dicarbonsäuren sind beispielsweise: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch verwendet werden. Anstelle der Dicarbonsäuren können auch die entsprechenden Carbonsäurederivate wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar-, und Adipinsäure im Mengenverhältnis von beispielsweise 20 bis 35:35 bis 50:20 bis 32 Gew.-Teilen und insbesondere Adipinsäure. Als zwei und mehrwertige Alkohole, insbesondere Alkandiole und Dialkylenglykole können erfindungsgemäß eingesetzt werden: Ethandiol, Diethylenglykol, 1,2- bzw. 1,3-Propandiol, Dipropylenglykol, 1,4-Butandiol, 1,5-Pentandiol und 1,6-Hexandiol.
Eingesetzt werden können ferner Polyesterpolyole aus Lactonen, z.B. ε-Caprolacton oder Hydroxycarbonsäuren z.B. ω-Hydroxycapronsäure.

Zur Herstellung der Polyesterpolyole können die organischen z.B. aromatischen und vorzugsweise aliphatischen Dicarbonsäuren und/oder deren Derivate und die mehrwertigen Alkohole und/oder Alkylenglykole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C vorzugsweise 189 bis 220°C gegebenenfalls unter vermindertem Druck bis zu der gewünschten Säurezahl, die vorteilhafterweise kleiner als 10, vorzugsweise kleiner als 2 ist, polymerisiert werden. Gemäß einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln wie z.B. Benzol, Toluol, Xylol oder Chlorbenzol, zur azeotropen Abdestillation des Kondensationswassers durchgeführt werden.

Zur Herstellung der Polyesterpolyole werden die organischen Dicarbonsäuren und/oder deren Derivate und die mehrwertigen Alkohole vorteilhafterweise im Molverhältnis von 1:1 bis 1,8, vorzugsweise 1:1,05 bis 1,2, polykondensiert. Die erhaltenen Polyesterpolyole weisen vorzugsweise eine Funktionalität von 2 bis 4, insbesondere 2 bis 3, und eine Hydroxylzahl von 240 bis 30, vorzugsweise 180 bis 40 auf.

Besonders bevorzugt zur Herstellung von Hartschaumstoffen sind hoch aromatische Polyesterpolyole, die z.B. aus der Umesterung von Polyethylenterephthalat (PET) mit aliphatischen Glykolen wie z.B. Ethandiol-1,2, Diethylenglykol, Glyzerin, Pentandiol-1,4, Hexandiol-1,6 in Gegenwart von Umesterungskatalysatoren wie z.B. Titanate und Zinnkatalysatoren aus PET-Reststoffen hergestellt werden können. Aufgrund des hohen aromatischen Anteils von 20 bis 40 Gew.% bezogen auf das Polyesterpolyol wird die Flammwidrigkeit sowie die physikalischen Eigenschaften des PU-Schaumstoffes wie Dimensionsstabilität, Hydrolyseempfindlichkeit etc. deutlich verbessert.
Die aromatischen Polyesterpolyole weisen vorzugsweise eine Funktionalität von 2 bis 4, insbesondere 2 bis 3, und eine Hydroxylzahl von 240 bis 30, vorzugsweise 260 bis 190 auf.
Besonders bevorzugt bei der Herstellung von Hartschaumstoffen sind nach der Polyisocyanurat-Technologie (PIR) hergestellte hoch aromatische Polyesterpolyole, da aufgrund der hohen Aromatizität dieser Polyesterpolyole und der gegenüber Polyetherpolylen höheren Temperaturbeständigkeit der Estergruppen der mittels Trimerisierung von Isocyanaten bevorzugt polymerischen Isocyanaten hergestellte PIR-Hartschaumstoff besonders flammwidrig ist.

Als Polyhydroxylverbindungen werden insbesondere Polyoxyalkylenpolyole verwendet, die nach bekanntem Verfahren hergestellt werden. Dies geschieht beispielsweise durch anionische Polymerisation mit Alkalihydroxiden, wie Natrium- oder Kaliumhydroxid, oder mit Alkalialkoholaten wie Natriummethylat, Natrium- oder Kaliummethylat oder Kaliumisopropylat, als Katalysatoren und unter Zusatz mindestens eines Startermoleküls, das 2 bis 8 vorzugsweise 2 bis 3 reaktive Wasserstoffatome gebunden enthält, zur Herstellung von Polyoxyalkylenpolyolen für flexible PU-Schaumstoffe, und vorzugsweise 3 bis 8 reaktive Wasserstoffatome gebunden enthält zur Herstellung von Polyoxyalkylenpolyolen für halbharte und harte PU-Schaumstoffe, oder durch kationische Polymerisation mit Lewis-Säuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest.

Erfindungsgemäß geeignete Alkylenoxide sind beispielsweise Tetrahydrofuran, 1,3-Propylenoxid, 1,2-bzw. 2,3-Butylenoxid und vorzugsweise Ethylenoxid und 1,2-Propylenoxid. Die Alkylenoxide können einzeln, alternierend nacheinander oder als Mischungen verwendet werden.

Als Startermoleküle werden beispielsweise verwendet: Wasser, organische Dicarbonsäuren, wie Bernsteinsäure, Adipinsäure, Phthalsäure und Terepthalsäure, aliphatische und aromatische, gegebenenfalls N-mono, N,N- und N,N'-dialkylsubstituierte Diamine mit 1 bis 4 Kohlenstoffatomen im Alkylrest, wie gegebenenfalls mono- und dialkylensubstituiertes Ethylendiamin, Diethylentriamin, Triethylentetramin, 1,2-Propylenamin, 1,3- bzw. 1,4 Butylendiamin, 1,2 -, 1,3-, 1,4-, 1,5- und 1,6 Hexamethylendiamin, Phenylendiamin, 2,3-, 3,4-, 2,4- und 2,6 Toluylendiamin und 4,4'-, 2,4'- und 2,2' Diaminodiphenylmethan, Alkanolamin, wie z.B. Ethanolamin, N-Methyl- und N-Ethylethanolamin, Dialkanolamine, wie z.B. Diethanolamin, N-Methyl- und N-Ethyldiethanolamin und Trialkanolamine, wie z.B. Triethanolamin, und Ammoniak. Vorzugsweise verwendet werden mehrwertige, insbesondere zwei- bis achtwertige Alkohole und/oder Alkylenglykole wie z.B. Ethandiol, Propandiol-1,2 und -1,3, Diethylenglykol, Dipropylenglykol, Butandiol-1,4, Hexandiol-1,6, Glyzerin, Trimethylolpropan, Pentaerythrit, Sorbit und Sucrose sowie Mischungen aus mindestens zwei mehrwertigen Alkoholen.

Die Polyoxyalkylenpolyole, vorzugsweise Polyoxypropylen- und Polyoxypropylen-polyoxyethylenpolyole, weisen eine Funktionalität von 2 bis 8 und Hydroxylzahlen von 25 bis 500 auf, wobei für flexible PU-Schaumstoffe Polyoxyalkylenpolyole mit einer Funktionalität von 2 bis 3 und einer Hydroxylzahl von 30 bis 80 und für halbharte und harte PU-Schaumstoffe Polyoxyalkylenpolyole mit einer Funktionalität von 3 bis 8 und einer Hydroxylzahl von 100 bis 500 bevorzugt werden und geeignete Polyoxytetramethylenpolyole eine Hydroxylzahl von 30 bis ungefähr 280 aufweisen. Als Polyoxyalkylenpolyole eignen sich ferner polymermodifizierte Polyoxyalkylenpolyole, vorzugsweise Propfpolyoxyalkylenpolyole, insbesondere solche auf Styrol- und/oder Acrylnitrilbasis, die durch in situ-Polymerisation von Acrylnitril, Styrol oder vorzugsweise Mischungen aus Styrol und Acrylnitril, z.B. im Gewichtsverhältnis 90: 10 bis 10:90, vorzugsweise 70:30 bis 30:30, in zweckmäßigerweise analog den Angaben der deutschen Patentschriften 11 11 395, 12 22 669, 11 52 536 und 11 52 537 hergestellt werden, sowie Polyoxyalkylenpolyoldispersionen, die als disperse Phase, üblicherweise in einer Menge von 1 bis 5 Gew.%, vorzugsweise 2 bis 25 Gew.% enthalten: z.B. Polyharnstoffe, Polyhydrazide, Tert-Aminogruppen gebunden enthaltene Polyurethane und/oder Melamin und die z.B. beschrieben werden in der EP-B 011 752, US 4,374,209 und DE-A 32 32 497.

Die Polyoxyalkylenpolyole können einzeln oder in Form von Mischungen verwendet werden. Ferner können sie mit den Propf-polyoxyalkylepolyolen oder Polyesterpolyolen sowie den hydroxylgruppenhaltigen Polyesteramiden, Polyacetalen und/oder Polycarbonaten gemischt werden.

Als Polyol-Komponente werden im Zusammenhang mit der vorliegenden Erfindung auch Polyoxyalkylen-Polyamine mit einer Aminzahl von vorzugsweise 25 bis 500 verstanden. Erfindungsgemäß einsetzbare hydroxylgruppenhaltige Polyacetale sind z.B. die aus Glykolen, wie Diethylenglykol. Triethylenglykol, 4,4'-Dihydroxyethoxy-diphenyldimethyl-methan, Hexandiol und Formaldehyd herstellbaren Verbindungen. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die beispielsweise durch Umsetzung von Diolen, wie z.B. Propandiol-(1,3), Butandiol-(1,4) und/oder Hexandiol-(1,6), Diethylenglykol, Triethylenglykol oder Tetraethylenglykol mit Diarylcarbonaten z.B. Diphenylcarbonat, oder Phosgen hergestellt werden.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkohlen und/oder Polyaminen gewonnenen, vorwiegend linearen Kondensate.

Als B-Komponente wird im Zusammenhang mit der vorliegenden Erfindung die zur Herstellung des Polyurethans notwendige Isocyanat-Komponente verstanden.

Als erfindungsgemäß geeignete Di- und /oder Polyisocyanate können folgende Isocyanate verwendet werden:
Alkylendiisocyanate mit 4 bis 12 Kohlenstoffatomen im Alkylenrest wie z.B. 1,2-Dodecandiisocyanat, 2-Ethyl-tetratmethylen-diisocyanat-1,4, 2-Methyl-pentanmethylendiisocyanat-1,5, 2-Ethyl-2-butyl-pentanmethylen-diisocyanat-1,5, Tetramethylendiiso-cyanat-1,4 und vorzugsweise Hexamethylendiisocyanat-1,6;: cycloaliphatische Diisocyanate wie z.B. Cyclohexan-1,3 und 1,4-diisocyanat sowie beliebige Gemische dieser Isomeren, 1-Isocyanato-3,3,5-trimethyl-5-isocyanatomethyl-cyclohexan (Isophorondiisocyanat) 2,4- und 2,6- Hexahydrotoluyen-diisocyanat sowie die entsprechenden Isomerengemische, 4,4'- 2,2'- und 2,4'-Dicyclohexyl-methandiisocyanat und die entsprechenden Isomerenmischungen, und vorzugsweise aromatische Di- und Polyisocyanate, wie z.B. 2,4- und 2,6-Toluylendiisocyanat und die entsprechenden Isomerengemische, 4,4'-,2,4', 2,2'-Diphenylmethandiisocyanat und die entsprechenden Isomerengemische, Mischungen aus 4,4'-, 2,4', 2,2'-Diphenylmethandiisocyanaten und Polyphenyl-polymethylenpolyisocanaten (ROH-MDI) und Mischungen aus ROH-MDI und Toluylendiisocyanaten. Die organischen Di- und Polyisocyanate können einzeln oder in Form ihrer Mischungen eingesetzt werden.

Als organische Polyisocyanate können Mischungen aus Diphenylmethan-diisocyanaten und Polyphenylpolymethylen-polyisocyanaten vorzugsweise solche mit einem Diphenylmethandiisocyanatgehalt von mindestens 35 Gew.%, z.B. von 45 bis 95 Gew.% und insbesondere von 48 bis 60 Gew.%, eingesetzt werden. Am meisten bevorzugt ist 4,4'-Methylendi (phenylisocyanat) (MDI).

Insbesondere bei der Herstellung von flexiblen PU-Schaumstoffen kann sich zur Modifizierung der mechanischen Eigenschaften der PU-Schaumstoffe, z.B. der Härte, der Zusatz von Kettenverlängerungsmitteln, Vernetzungsmitteln oder gegebenenfalls auch Gemischen davon als vorteilhaft erweisen. Bei der Herstellung von PU-Hartschaumstoffen kann üblicherweise auf die Verwendung von Kettenverlängerungsund/oder Vernetzungsmitteln verzichtet werden. Als Kettenverlängerungsmittel können difunktionelle Verbindungen, als Vernetzungsmittel tri- und höherfunktionelle Verbindungen jeweils mit Molekulargewichten kleiner als 400 vorzugsweise von 62 bis ungefähr 300 verwendet werden. Als Kettenverlängerungsmittel beispielhaft genannt seien Alkandiole z.B. solche mit 2 bis 6 Kohlenstoffatomen im Alkylenrest, wie z.B. Ethan-, 1,3-Propan-, 1,4-Butan-, 1,5-Pentan- und 1,6 Hexandiol und Dialkylenglykole, wie z.B. Diethylen-, Dipropylen- und Dibutylengyklol, und als Vernetzungsmittel Alkanolamine z. B. Ethanolamin, Dialkanolamin, z.B. Diethanolamin und Triaklkanolamin z.B. Triethanolamin und Triisopropanolamin und drei und/oder höherwertige Alkohole, wie z.B. Glyzerin, Trimethylolpropan und Pentaeryrhrit. Als Kettenverlängerungsmittel- oder Vernetzungsmittel eignen sich ferner die niedermolekularen Ethoxylierungs- und/oder Propoxylierungsprodukte z.B. solche mit Molekulargewichten bis ungefähr 400, der vorgenannten mehrwertigen Alkohole. Alkylenglykole, Alkanolamine sowie von aliphatischen und/oder aromatischen Diaminen.

Als Kettenverlängerungsmittel vorzugsweise eingesetzt werden Alkandiole, insbesondere Butandiol-1,4 und/oder Hexandiol-1,6, Alkylenglykole, insbesondere Ethylenglykol und Propylenglykol, und als Vernetzungsmittel dreiwertige Alkohole, insbesondere Glyzerin und Trimethylolpropanol, Dialkanolamine, insbesondere Diethanolamin und Trialkanolamin, insbesondere Triethanolamin.

Die Kettenverlängerungs- und/oder Vernetzungsmittel, die vorzugsweise zur Herstellung von flexiblen PU-Schaumstoffen mitverwendet werden, können beispielsweise in Mengen von 2 bis 60 Gew.%, vorzugsweise von 10 bis 40 Gew.%, bezogen auf das Gewicht der höhermolekularen Verbindungen der Polyol-Komponente eingesetzt werden.

Als Treibmittel zur Herstellung von zelligen Polyurethane geeignet sind Wasser und/oder bei Raumtemperatur in flüssiger Form vorliegende Gase und Flüssigkeiten, welche gegenüber den Polyol- und Isocyanat-Komponenten, deren Gemischen oder Isocyanat-Prepolymer-Mischungen inert sind und Siedepunkte unter 50°C insbesondere zwischen -50°C und 30°C bei Atmosphärendruck aufweisen, sowie Mischungen aus gasförmigen und flüssigen Treibmitteln. Beispiele derartiger vorzugsweise verwendbarer Gase und Flüssigkeiten sind Alkane wie z.B. Propan, n-und iso-Butan, n- und iso-Pentan, vorzugsweise technische Gemische aus n- und iso-Pentan und Cycloalkane, wie z.B. Cyclopentan, Alkylether, wie z.B. Dimethylether, Diethylether und Methylisobutylether, Carbonsäurealkylester, wie. z.B. Methylformiat und halogenierte Kohlenwasserstoffe, wie z.B. Dichlorfluormethan, Trifluormethan, 1-Dichlor-1-fluorethan, Monochlortrifluorethan, Monochlordifluorethan, Difluorethan, Dichlortrifluorethan, Monochlortetrafluorethan, Pentafluorethan, Tetrafluorethan und Dichlormonofluorethan, oder auch Butan, 245fa und 365 mfc. Zur Herstellung der zelligen Polyurethane, vorzugsweise PU-Schaumstoffe, werden insbesondere Wasser, lineare und cyclische Alkane mit 5 bis 7 C-Atomen und Mischungen davon eingesetzt. Die beispielhaft genannten Treibmittel können einzeln oder als Mischungen verwendet werden.

Im Gemisch mit Flüssigkeiten mit Siedepunkten unter 50°C verwendet werden können auch (Cyclo)alkane wie z.B. Hexan und Cyclohexan und Carbonsäurealkylester wie. z.B. Ethylformiat, mit Siedepunkten über 50°C, sofern die Treibmittelmischung zweckmäßigerweise einen Siedepunkt unter 38°C aufweist. Die erforderliche Menge an Treibmittel oder -mischung kann in Abhängigkeit von der Art des Treibmittels oder der Treibmittelmischung sowie den Mischungsverhältnissen in einfacher Weise experimentell bestimmt werden. Üblicherweise werden die Treibmittel in einer Menge von 0,1 bis 30 Gew.-Teilen, vorzugsweise von 1 bis 25 Gew.%-Teilen, bezogen auf 100 Gew.-Teile der Polyol- und Isocyanat-Komponente sowie des gegebenenfalls vorhandenen Kettelverlängerungs- oder Vernetzungsmittels.

Katalysatoren, die bei der PU-Herstellung eingesetzt werden können, sind vorzugsweise Verbindungen, die die Reaktion der höhermolekularen Polyol-Komponente mit der Isocyanat-Komponente, der Trimerisierung von vorzugsweise polymerischen MDI zu Isocyanurat oder der Isocyanat-Prepolymer-Mischungen stark beschleunigen. Als Katalysatoren in Betracht kommen z.B. organische Metallverbindungen für die PUR-Reaktion vorzugsweise organische Zinnverbindungen, wie Zinn(II)salze von organischen Carbonsäuren, z.B. Zinn(II)diacetat, Zinn(II)-dioctoat, Zinn(II)-diethylhexoat und Zinn(II)-dilaurat, Dibutylzinnmaleat, Dioctylzinndiacetat und Dibutylzinndimercaptid, für die Trimerisierung von Isocyanaten zur Bildung von Isocyanurat-Gruppen (PIR)insbesondere zur Erhöhung der Dimensionsstabilität und Erhöhung der Flammfestigkeit vorzugsweise Kaliumacetat, Kaliumoctoat oder Hydrotriazine. Für die Katalyse der Urethan- bzw. Harnstoffbildung können auch starke basische Amine, beispielsweise Aminidine, wie z.B. 2,3-Dimethyl-3,4,5,6-tetrahydropyrimidin, tertiäre Amine wie z.B. Triethylamin, Tributylamin, Dimethylethylendiamin, N,N,N',N'-Tetramethylbutandiamin, N,N,N',N'-Tetramethylhexandiamin-1,6, Di-(4-N,N-dimethylaminocyclohexyl)methan, Pentamethyldiethylentriamin, Tetramethyldiaminoethylether, Bis(dimethylaminopropyl)harnstoff, Dimethylpiperazin, 1,2-Dimethylimidazol, 1-Aza-bicyclo[3.3.0]octan, Alkanolaminverbindungen, wie Triethanolamin, Triisopropanolamin, N-Methyl- und N-Ethyl-diethanolamin und Dimethylethanolamin, Tris(N,N-dialkylaminoalkyl)-shexahydrotriazine, insbesondere Tris(-N,N-diethanolaminopropyl)-s-hexahydrotriazin, Tetraalkylammoniumhydroxide, wie Tetramethylammoniumhydroxid und vorzugsweise 1,4-Diazabicyclo[2.2.]octan eingesetzt werden. Vorzugsweise verwendet werden 0,001 bis 5 Gew.% insbesondere 0,05 bis 2 Gew.%, Katalysator bzw. Katalysatorkombinationen, bezogen auf das Gewicht der Polyol-Komponente.

Der Reaktionsmischung, insbesondere der Polyol-Komponente zur Herstellung der erfindungsgemäßen kompakten oder zelligen Polyurethane, vorzugsweise PU-Schaumstoffe, können gegebenenfalls auch noch Hilfsmittel zugefügt werden, wie beispielsweise oberflächenaktive Substanzen, Schaumstabilisatoren, Zellregler, Flammschutzmittel, Füllstoffe, Farbstoffe, Pigmente, Antistatika, Hydrolyseschutzmittel, fungistatisch und bakteriostatisch wirkende Substanzen.

Als oberflächenaktive Substanzen können z.B. Verbindungen verwendet werden, welche zur Unterstützung der Homogenisierung der Reaktionsmischungen dienen und gegebenenfalls auch geeignet sind, die Zellstruktur der PU-Schaumstoffe zu regulieren. Dies sind beispielsweise Emulgatoren, wie die Natriumsalze von Ricinusölsulfaten oder von Fettsäuren, sowie Salze von Fettsäuren mit Aminen, z.B. Ölsäure Diethylamin, stearinsaures Diethanolamin, ricinolsaures Diethanolamin, Salze von Sulfonsäuren, z.B. Alkali- oder Ammoniumsalze von Dodecylbenzol- oder Dinaphtylmethandisulfonsäure, und Ricinolsäure; Schaumstabilisatoren, wie Siloxanoxalkylen-Mischpolymerisate und andere Organopolysiloxane, oxethylierte Alkylphenole, oxethylierte Alkylphenole, oxethylierte Fettalkohole, Paraffinöle, Rizinusöl- bzw. Ricinolsäureester, Türkischrotöl und Erdnußöl und Zellregler, wie pyrogene Kieselsäure, Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden erfindungsgemäß in Mengen von 0.001 bis 5 Gew.-Teilen bezogen auf 100 Gew.-Teile der Polyol-Komponente angewandt.

Erfindungsgemäß einsetzbare Flammschutzmittel sind beispielsweise Diphenylkresylphosphat, Trikresylphosphat, Tris-(2-chloroethyl)-phosphat, Tris-(2-chloropropyl)-phosphat, Tris-(1,3-dichloropropyl)-phosphat, Tris-(2,3-dibromopropyl)-phosphat, Tetrakis-(2-chloroethyl)-ethylendiphosphat, Dimethylmethylphosphonat oder Diethylethylphosphonat. Außer den genannten halogensubstituierten Phosphaten können auch anorganische Flammschutzmittel, wie z.B. Aluminiumoxidhydrat, Antimontrioxid, Arsenoxid, Ammoniummonopolyphosphat, Blähgraphit und Calciumsulfat, Cyanursäurederivate, wie z.B. Melamin, gecoateter roter Phosphor, als Synergisten Metallsalze auf Basis von Molybdaten, Boraten, Stannaten oder Mischungen aus mindestens zwei Flammschutzmitteln, wie z.B. Ammoniumpolyphosphate und Melamin und/oder Blähgraphit eingesetzt werden. Im allgemeinem hat es sich als zweckmäßig erwiesen, 5 bis 50 Gew.-Teile, vorzugsweise 10 bis 25 Gew.-Teile der genannten Flammschutzmittel oder - mischungen für jeweils 100 Gew.-Teile der Komponenten zu verwenden.

Als Füllstoffe, insbesondere verstärkend wirkende Füllstoffe, sind die an sich bekannten, üblichen organischen und anorganischen Füllstoffe wie z.B. silikatische Mineralien, beispielsweise Schichtsilikate, wie Antigorit, Serpentin, Hornblenden, Amphibole, Chrysotil, Zeolithe, Talkum, Metalloxide, wie z.B. Kaolin, Aluminiumoxide, Aluminiumsilikate, Titanoxide und Eisenoxide, Metallsalze wie z.B. Kreide, Schwerspat und anorganische Pigmente, wie Cadmiumsulfid, Zinksulfid, sowie Glaspartikel einsetzbar. Als organische Füllstoffe können beispielsweise verwendet werden: Ruß, Melamin, Kolophonium, Cylopentadienylharze und Propfpolymerisate. Die organischen und anorganischen Füllstoffe können einzeln oder als Gemische verwendet werden und werden der Reaktionsmischung vorteilhafterweise in Mengen von 0,5 bis 50 Gew.%, vorzugsweise 1 bis 10 Gew.%, bezogen auf das Gewicht der Polyol-Komponente zugefügt.

Die Erfindung betrifft auch Polyurethane, die nach einem der vorhergehenden Verfahren hergestellt wurden. In einer besonders bevorzugten Ausführungsform betrifft die Erfindung nicht-zellige oder mikrozelluläre Polyurethane, also Polyurethane, die ohne Zugabe von Wasser beziehungsweise nur von Restanteilen von Wasser hergestellt wurden. Die Erfindung betrifft auch Formteile, Klebstoffe und Gießharze, die die vorgenannten Polyurethane enthalten beziehungsweise aus diesen bestehen.
Die erfindungsgemäßen hergestellten kompakten bzw. zelligen Polyurethane werden insbesondere verwendet zur Herstellung von Polyurethanschäumen, beispielsweise weichen Polyurethanschäumen, zur Herstellung von Möbeln, z.B. Möbelkissen, und Automobilsitzen oder Matratzen. Daneben können die Polyurethane auch verwendet werden zur Herstellung von Polyurethanhartschaumstoffen z.B. zur Herstellung von Isolationsmaterialien, wie z.B. bei Kühlschränken, Laminatplatten, Sandwich-Paneelelementen, Boilerisolierungen, Blockschaum als Isolationsschäume in den Brandklassen DIN 4102 B1, B2 und B3 oder z.B. entsprechendend den französichen Epiradiateur-Test M1, M2 und M3. Die erfindungsgemäß hergestellten Polyurethane finden Verwendung zur Herstellung von offen- oder geschlossenzelligen Hartschäumen z.B. für thermoverformbare offen- und geschlossenzellige Elemente z.B. Teile im Automobilbereich wie z.B. Dachhimmel, Boilerumschäumungen, Laminatplatten, zum Beispiel mit flexiblen Deckschichten, Tunnelabdeckungen, Paneele, Dekorelementen oder z.B. für die Herstellung von Dekoplatten für Ausstellungsund Messebauzwecke entsprechend den verschiedensten Brandklassen z.B. B1, B2 und M1. Offenzellige Hartschäume werden eingesetzt als Stützmaterial z.B. als Verpackungsschaum. Die erfindungsgemäße Verfahrensweise findet auch Anwendung zur Herstellung von kompakten Polyurethanen z.B. Duromeren, wie sie bei Computergehäusen, Schiebedachabdeckungen oder Fensterrahmen eingesetzt werden oder zur Herstellung von Halbhart- und Hart-Integralschäumen wie sie bei Lenkrädern, Schuhsohlen und Kochstellenfassungen Verwendung finden. Die aus den erfindungsgemäßen Polyurethanen hergestellten Formteile zeigen bessere mechanische und anwendungstechnische Eigenschaften als Formteile aus Kohlenhydrat-freien herkömmlicherweise hergestellten Polyurethanen, insbesondere einen verringerten Schrumpf sowie eine verbesserte Stauchhärte, Dehnung und Reißfestigkeit.

Die Verarbeitung der erfindungsgemäßen Reaktionsmischungen kann je nach gewünschtem Anwendungsgebiet und Endprodukt auf konventionellem Weg, zum Beispiel auf Hochdruck- oder Niederdruckmaschinen, erfolgen, also auf dieselbe Weise wie die bisher bekannten Polyurethan-Reaktionsmischungen.

Weitere vorteilhafte Ausführungsformen der Erfindung sind den Unteransprüchen zu entnehmen.

Im folgenden werden Ausführungsbeispiele der vorliegenden Erfindung näher beschrieben.

### Beispiel 1: Halbhartschaum auf Polyetherpolyol-Basis

### Herstellung von Halbhartschaum

### 1. Herstellung der Kohlenhydratkomponente

Durch Vermahlung und Windsichtung eines kommerziell erhältlichen Kristallzuckers wurde ein Feinstzucker hergestellt und in dem Flammschutzmittel DMMP dispergiert. Die so erhaltene Suspension hatte einen Feststoffgehalt von 60 - 70% und die Partikelgröße lag im wesentlichen unter 30 µm. Es lagen keine Partikel mit einer Größe über 50 µm vor. Die Partikelgrößenanalysen des Feinstzuckers und der resultierenden Suspension waren annähernd identisch.

### 2. Herstellung der Reaktionsmischung

Als Komponente A diente eine Polyolkomponente aus 80,0 Gew.-% Grundpolyol, 5,0 Gew.-% Glycerin, 1,0 Gew.-% einer 33 %-igen Lösung von Diazabicyclooctan in Dipropylenglycol, 1,0 Gew.-% Schaumstabilisator auf Polysiloxanbasis, 1,3 Gew.-% Wasser und 10 Gew.-% feingemahlener Puderzucker, wie unter Beispiel 1, Punkt 1 beschrieben.

Das Grundpolyol war ein trifunktionelles Polyetherpolyol mit einer Hydroxylzahl von 28 mg KOH/g und einer Viskosität von 1000 m Pa·s (25°). Das Polyol ist an sich bekannt.

Als Komponente B (Isocyanat-Komponente) diente eine Polyisocyanatmischung mit einem -N=C=O-Gehalt von 30 %. Die Komponente ist an sich bekannt.

Die Komponenten A und B wurden von Hand mit einem Dissolver gemischt und zur Reaktion in die entsprechende Form gegossen.

### 3. Ergebnisse

Zur Beurteilung der mechanischen Eigenschaften wurde der vorgenannte Schaum mit einem Halbhart-Schaum verglichen, dessen Formulierung in Abweichung von der vorgenannten Rezeptur keinen Puderzucker, dafür aber statt 80 Gew.-% Grundpolyol 90 Gew.- % Grundpolyol enthielt.

Die Ergebnisse sind aus der folgenden Tabelle 1 ersichtlich:

**Tabelle 1**

| Eigenschaften | Mit Puderzucker | Ohne Puderzucker |
|---|---|---|
| Raumgewicht (g/l) | 250 | 250 |
| Shore-A-Härte | 45 | 38 |
| Zugfestigkeit Haut (N/cm²) | 50 | 40 |
| Dehnung Haut (N/cm²) | 62 | 70 |
| Stauchhärte (kPa) | 100 | 90 |

Aus der Tabelle 1 geht hervor, daß die mechanischen Eigenschaften hinsichtlich der wichtigen Parameter Stauchhärte, Shore-A-Härte sowie Zugfestigkeit beim puderzuckerhaltigen Schaum deutlich verbessert sind.

### Beispiel 2: Herstellung von Integral-Halbhartschaum

### 1. Herstellung der Kohlenhydratkomponente

Kommerziell erhältlicher Puderzucker (Südzucker AG, feinst) wurde mit dem Flammschutzmittel DMMP in einer Kugelmühle zu einer Suspension mit einem Feststoffgehalt von 60-70 % vermahlen. Die Partikelgröße betrug im wesentlichen unter 30 µm. Es lagen keine Partikel mit einer Größe über 50 µm vor.

### 2. Herstellung der Reaktionsmischung

Als Komponente A diente eine Polyolkomponente aus 80,0 Gew.-% Grundpolyol, 5,0 Gew.-% Butandiol, 1,0 Gew.-% einer 25 %-igen Lösung von Diazabicyclooctan in Butandiol, 0,2 Gew.-% Schaumstabilisator auf Polysiloxanbasis, 3,0 Gew.-% physikalisches Treibmittel (Cyclopentan, H-FCKW) und 10 Gew.-% Puderzukker.

Das Grundpolyol war ein trifunktionelles Polyetherpolyol mit einer Hydroxylzahl von 36 mg KOH/g und einer Viskosität von 880 m Pa·s (25°). Diese Komponente ist bekannt.

Als Komponente B (Isocyanat-Komponente) diente eine Polyisocyanatmischung mit einem -N=C=O-Gehalt von 26 %. Die Komponente ist an sich bekannt.

Die Komponenten A und B wurden von Hand mit einem Dissolver gemischt und in die entsprechende Form gegossen.

### 3. Ergebnisse

Zur Beurteilung der mechanischen Eigenschaften wurde der vorgenannte Integralhalbhartschaum mit einem Integral-Halbhart-schaum verglichen, dessen Rezeptur keinen Puderzucker, dafür aber statt 80 Gew.-% Polyol 90 Gew.-% Polyol enthielt.

Die Ergebnisse sind aus der folgenden Tabelle 2 ersichtlich:

**Tabelle 2**

| Eigenschaften | Mit Puderzucker | Ohne Puderzucker |
|---|---|---|
| Raumgewicht (g/l) | 450 | 450 |
| Shore-A-Härte | 68 | 60 |
| Zugfestigkeit Haut (N/cm²) | 620 | 600 |
| Dehnung Haut (N/cm²) | 150 | 160 |

Aus der Tabelle 2 geht hervor, daß die mechanischen Eigenschaften hinsichtlich der wichtigen Parameter Shore-A-Härte sowie Zugfestigkeit beim puderzuckerhaltigen Schaum deutlich verbessert werden.

### Beispiel 3: Halbhartschaum auf Polyesterpolyolbasis

### 1. Herstellung der Kohlenhydratkomponente

Kommerziell erhältlicher Puderzucker (Südzucker AG, feinst) wurde mit dem Flammschutzmittel DMMP in einer Kugelmühle zu einer Suspension mit einem Feststoffgehalt von 60-70 % vermahlen. Die Partikelgröße betrug im wesentlichen unter 30 µm. Es lagen keine Partikel mit einer Größe über 50 µm vor.

### 2. Herstellung der Reaktionsmischung

Als Komponente A diente eine Polyolkomponente aus 84,0 Gew.-% Grundpolyol, 4,0 Gew.-% Butandiol, 1,0 Gew.-% einer 25 %-igen Lösung von Diazabicyclooctan in Butandiol, 0,2 Gew.-% Schaumstabilisator auf Polysiloxanbasis, 0,4 Gew.-% Wasser und 10 Gew.-% Puderzucker.

Das Grundpolyol war ein Polyesterpolyol mit einer Hydroxylzahl von 56 mg KOH/g und einer Viskosität von 500 m Pa·s (75°). Das Grundpolyol ist bekannt.

Als Komponente B (Isocyanat-Komponente) diente eine polyestermodifiziert Polyisocyanatmischung mit einem -N=C=O-Gehalt von 19 %. Die Komponente ist an sich bekannt.

Die Komponenten A und B wurden von Hand in einem Dissolver gemischt und zur Reaktion in die entsprechende Form gegossen.

### 3. Ergebnisse

Zur Beurteilung der mechanischen Eigenschaften wurde der vorgenannte Halbhartschaum mit einem Halbhartschaum verglichen, dessen Rezeptur keinen Puderzucker, dafür aber statt 84 Gew.-% Grundpolyol 94 Gew.-% Grundpolyol enthielt.

Die Ergebnisse sind aus der folgenden Tabelle 3 ersichtlich:

**Tabelle 3**

| Eigenschaften | Mit Puderzucker | Ohne Puderzucker |
|---|---|---|
| Raumgewicht (g/l) | 500 | 500 |
| Shore-A-Härte | 35 | 30 |
| Zugfestigkeit Haut (MPa) | 4,0 | 3,5 |
| Dehnung Haut (N/cm²) | 550 | 600 |

Aus der Tabelle 3 geht hervor, daß die mechanischen Eigenschaften hinsichtlich der wichtigen Parameter Shore-A-Härte sowie Zugfestigkeit beim puderzuckerhaltigen Schaum deutlich verbessert werden.

### Beispiel 4: Herstellung von Weichschäumen

### 1. Kommerziell erhältliche Weichschäume

Im Rahmen der Weichschaumherstellung wurde beim bekannten, kommerziell erhältlichen Weichschaum aus 2 Teilen vom Typ ZELUPUR HR 8957/3 in Verbindung mit 1 Teil Weichschaum vom Typ ZELUNAT 8942 in der herkömmlichen Rezeptur die Polyetherpolyolkomponente teilweise durch 10 Gew.-% eines Kohlenhydrats ersetzt (Proben 2 bis 6). Die folgenden Proben wurden untersucht:
- Probe 1:: Original (Vergleichsprobe)
- Probe 2:: Puderzucker (Herstellung siehe Beispiel 1, Punkt 1, vorstehend)
- Probe 3:: Inulin (hochpolymer)
- Probe 4:: Raftline
- Probe 5:: Fondant
- Probe 6:: Maisstärke (Vergleichsprobe)

Die Teile wurden handgeschäumt. Probe 1 war geschlossenzellig, die Proben 2,3,5 und 6 waren offenzellig und im Gegensatz zu Probe 1 sehr trocken. Probe 4 war nicht schäumbar, da Raftline im Polyol verklumpte.

### 2. Ergebnisse

Die Ergebnisse der Untersuchung von mechanischen Eigenschaften sind in der folgenden Tabelle 4 (Normalklima) zusammengefaßt.

**Tabelle 4**

| Eigenschaften | Proben | | | | |
|---|---|---|---|---|---|
| | 1 | 2 | 3 | 5 | 6 |
| Raumgewicht (g/l) | 65 | 65 | 65 | 65 | 65 |
| Stauchhärte (kPa) | 4,3 | 5,4 | 4,6 | 5,3 | 4,8 |
| Zugfestigkeit (N/cm²) | 6,1 | 7,5 | 7,0 | 7,8 | 4,1 |
| Bruchdehnung (%) | 78 | 63 | 71 | 68 | 54 |
| DVR (50%,22h, 70°C) | 8,9 | 5,2 | 5,2 | 3,5 | 3,5 |

Die erfindungsgemäßen Schäume zeigen im Gegensatz zu den kommerziell vertriebenen Schäumen hinsichtlich der Stauchhärte und der Zugfestigkeit ein verbessertes Eigenschaftsprofil.

Anschließend wurde eine 4 stündige Hydrolyse bei 1 bar und 120°C Sattdampf im Autoklaven durchgeführt. Danach wurden die Änderungen in der Stauchhärte, der Zugfestigkeit und der Bruchdehnung bestimmt. Auch hier zeigten die erfindungsgemäßen Schäume zufriedenstellende Eigenschaften. Die Ergebnisse sind der folgenden Tabelle 5 zu entnehmen.

**Tabelle 5**

| Eigenschaften | Proben | | | | |
|---|---|---|---|---|---|
| | 1 | 2 | 3 | 5 | 6 |
| Raumgewicht (g/l) | 65 | 65 | 65 | 65 | 65 |
| Stauchhärte (kPa) | 3,1 | 3,6 | 3,3 | 3,8 | 3,6 |
| Änderung | -28% | -33% | -28% | -28% | -28% |
| Zugfestigkeit (N/cm²) | 5,6 | 5,5 | 5,3 | 8,5 | 3,5 |
| Änderung | -8% | -20% | -24% | -17% | -15% |
| Bruchdehnung (%) | 107 | 85 | 80 | 84 | 73 |
| Änderung | +37% | +35% | +13% | +24% | +35% |

### Beispiel 5: Weichschaumformulierungen

### 1. Durchführung

In einer Versuchsreihe wurden 11 Weichschaumformulierungen auf der Basis von Polyetherpolyolen getestet. Es wurden wahlweise zwei Grundpolyole eingesetzt: Grundpolyol 1 war ein trifunktionelles Polyetherpolyol mit einer Hydroxylzahl von 36 mg KOH/g und einer Viskosität von 880 mPa·s (25°C). Grundpolyol 2 war ein trifunktionelles Polyetherpolyol mit einer Hydroxylzahl von 28 mg KOH/g und einer Viskosität von 1000 mPa·s (25°C).

Als Isocyanat-Komponente diente eine polyestermodifizierte Polyisocyanat-Mischung mit einem -N=C=O-Gehalt von 26 %. Die Zusammensetzungen der Reaktionsmischungen und die Meßergebnisse sind den folgenden Tabellen 6 und 7 zu entnehmen.

In Bezug auf die Qualität und Herstellung des eingesetzten Puderzuckers wird auf Beispiel 1, Punkt 1 vorstehend verwiesen.

**Tabelle 6**

| Formulierungen | | | | | | | | | | | |
|---|---|---|---|---|---|---|---|---|---|---|---|
| Komponenten | Proben-Nr. | | | | | | | | | | |
| | 1 | 2 | 3 | 4 | 5 | 6 | 7 | 8 | 9 | 10 | 11 |
| Grundpolyol 1 | 94, 0 | 94, 0 | 94, 0 | --- | --- | --- | 84, 0 | 84, 0 | 84, 0 | --- | --- |
| Grundpolyol 2 | --- | --- | --- | 94, 0 | 94, 0 | 94, 0 | --- | --- | --- | 84, 0 | 84, 0 |
| Zellöffner Arcol 2580 | 3,0 | 3,0 | 3,0 | 3,0 | 3,0 | 3,0 | 3,0 | --- | --- | --- | --- |
| Wasser | 2,4 | 3,0 | 4,2 | 2,4 | 3,0 | 4,2 | 2,4 | 3,0 | 4,2 | 2,4 | 3,0 |
| 33%-Lsg. Diaza-bicyclooctan in DPG | 0,5 | 0,5 | 0,5 | 0,5 | 0,5 | 0,5 | 0,5 | 0,5 | 0,5 | 0,5 | 0,5 |
| Schaumstabilisator auf Polysiloxanbasis | 0,5 | 0,5 | 0,5 | 0,5 | 0,5 | 0,5 | 0,5 | 0,5 | 0,5 | 0,5 | 0,5 |
| 70%-Lsg. Bis(dimethylaminoethyl)ether in DPG | 0,1 | 0,1 | 0,1 | 0,1 | 0,1 | 0,1 | 0,1 | 0,1 | 0,1 | 0,1 | 0,1 |
| Puderzucker | --- | --- | --- | --- | --- | --- | 10, 0 | 10, 0 | 10, 0 | 10, 0 | 10, 0 |

### 2. Ergebnisse

Zur Beurteilung der mechanischen Festigkeit wurden die folgenden Puderzucker-haltigen Formulierungen 7 bis 11 mit Formulierungen 1 bis 6, die keinen Puderzucker enthielten, verglichen.

**Tabelle 7**

| Ergebnisse | | | | | | | | | | | |
|---|---|---|---|---|---|---|---|---|---|---|---|
| Eigenschaften | Proben-Nr. | | | | | | | | | | |
| | 1 | 2 | 3 | 4 | 5 | 6 | 7 | 8 | 9 | 10 | 11 |
| Raumgewicht (g/l) | 67 | 59 | 50 | 69 | 59 | 47 | 67 | 64 | --- | 67 | 61 |
| Stauchhärte (kPa) | 5,4 | 5,9 | 6,6 | 4,0 | 5,0 | 5,7 | 7,3 | 7,2 | --- | 6,1 | 7,4 |
| Zugfestigkeit (N/cm²) | 7,2 | 9,2 | 10,9 | 5,8 | 7,1 | 10,3 | 7,0 | 8,4 | --- | 7,8 | 8,7 |
| Bruchdehnung (%) | 63 | 61 | 60 | 65 | 72 | 61 | 55 | 56 | --- | 64 | 65 |
| DVR(50%,22h, 70°C) | 3,7 | 4,4 | 5,4 | 3,0 | 3,4 | 7,3 | 4,3 | 4,4 | --- | 4,3 | 7,5 |

Auch hier zeigt es sich, daß die erfindungsgemäßen Schäume insbesondere hinsichtlich der Stauchhärte den herkömmlichen Schäumen überlegen sind. Die erfindungsgemäßen Schäume sind daher besonders gut zur Matratzenherstellung geeignet.

### Beispiel 6:

Die folgenden Ausführungsbeispiele betreffen charakteristische Hartschaumformulierungen mit Kohlenhydraten entsprechend dem erfindungsgemäßen Verfahren:

Das feinvermahlene Kohlenhydrat wurde entweder nach dem beschriebenen Naß- oder Trockenmahlverfahren hergestellt.

Die einzelnen Bestandteile der A-Komponente, das heißt Polyol-Komponente mit weiteren Komponenten, wurden bei ca. 5000 U min⁻¹ mit Hilfe eines Korbrührers ca. 20 sec. vermischt, anschließend die Isocyanat-Komponente zugeben und ebenfalls bei 5000 U min⁻¹ Sekunden vermischt. Das Reaktionsgemisch wurde in einen 575 ml Becher zum freien Aufsteigen überführt. Das angegebenen Parameter beziehen sich auf den von Hand vermischten frei aufgestiegenen Schaum. Die Brennstrecke ist nach DIN 4102 B2 und die Druckspannung nach DIN 53421 ermittelt worden.

Als Isocyanat-Komponente (B-Komponente) wurde polymerisches MDI, NCO ca. 31 %, Viskosität ca. 220 mPas, zum Beispiel Desmodur 44V20 der Firma Bayer oder Suprasec DNR der Firma ICI verwendet. Angabe der OHZ im mgKOH/g Polyol.

### Beispiel 6.1

### A-Komponente

10 Teile Diethylethylphosphonat
17 Teile Diethylenglykol
35 Teile feinvermahlener Zucker (Korngröße <50 µm)
28 Teile amingestartes Polyetherpolyol OHZ ca. 500, 5000 mPas (25°C)
0.6 Teile Pentamethyldiethylentriamin
1.0 Schaumstabilisator aus Siliconbasis (DC 5555 der Firma Dow Corning)
4.3 Teile Wasser

### Mischungsverhältnis A:B = 100:150

Startzeit 10 sec
Steigzeit 40 sec
Abbindezeit 60 sec
Raumgewicht 39 g/L
Druckspannung 0,19 N/mm²
Brandstrecke 7 cm

### Beispiel 6.2

### A-Komponente

30 Teile amingestartetes Polyetherpoylol OHZ 500, 5000 mPas
17 Teile Monoethylenglykol
33 Teile feinvermahlener Zucker (Korngröße <50 µm)
10 Teile Diethylethylphosphonat
1 Teile Silicon DC 55555
0.5 Teile Dimethylcyclohexylamin
0.1 Teile Pentamethyldiethylentriamin
1.0 Teil Wasser
10 Teile n-Pentan

### Mischungsverhältnis A:B = 100:140

Startzeit 10 sec
Steigzeit 40 sec
Abbindezeit 60 sec
Druckspannung 0,22 N/mm²
Raumgewicht 40 g/L
Brennstrecke 10 cm
Wärmeleitfähigkeit 23 mW/mK

### Beispiel 6.3

### A-Komponente

46 Teile Polyesterpolyol OHZ 300, 4000 mPas
40 Teile feinvermahlener Zucker (Korngröße <50 µm)
10 Teile Diethylethylphosphonat
2.5 Teile Kaliumoctoat 30 % in Diethylenglykol
0.05 Teile Pentamethyldiethylentriamin
0.5 Teile Wasser
10 Teile n-Pentan
1 Teil Schaumstabilisator (Tegostab B 8466 der Firma THG Goldschmidt)

### Mischverhältnis A:B = 100:140

Startzeit 15 sec
Steigzeit 40 sec
Abbindezeit 60 sec
Raumgewicht 50 g/L
Druckspannung 0,3 N/mm²
Brennstrecke 12 cm
Wärmeleitfähigkeit 23 mW/mK

### Beispiel 6.4

### A-Komponente

40 Teile Polyesterpolyol OHZ 250, 5000 mPas
35 Teile feinvermahlener Zucker (Korngröße <50 µm)
10 Teile Dimethylmethylphosphonat
14 Teile 141b (z.B. der Firma Solvay)
0.1 Teile Pentamethyldiethylentriamin
1.5 Teile Dimethylcyclohexylamin
1.5 Teile Kaliumoctoat 30% in Diethylenglykol
1 Teil Schaumstabilisator auf Siliconbasis (B 8460 der Firma THG Goldschmidt)

### Mischungsverhältnis A:B = 100:150

Startzeit 10 sec
Steigzeit 40 sec
Abbindezeit 60 sec
Raumgewicht 33 g/L
Druckspannung 0,21 N/mm²
Lambda 21 mW/mK
Brennstrecke 6 cm

### Beispiel 6.5

### A-Komponente

40 Teile Saccharose-gestartetes Polyetherpolyol OHZ 490,
8000 mPas (25°C)
20 Teile feingemahlener Zucker
0.3 Teile Dimethylcyclohexylamin
0.9 Teile Dimethylethanolamin
0.8 Teile Schaumstabilisator auf Siliconbasis (B 8460 der Firma THG Goldschmidt)
20 Teile Polyetherpolyol auf Glycerinbasis OHZ ca. 260, 300 mPas/20°C
14 Teile 141b (Fa. Solvay)
10 Teile Tris(chlorpropyl)phosphat
1.4 Teile Wasser

### Mischungsverhältnis A:B = 100:100

Startzeit 20 sec
Abbindezeit 110 sec
Steigzeit 160 sec
Raumgewicht 28 g/L
Druckspannung 0,13 N/mm²
Lambda 21 mW/mK
Brennstrecke 15 cm

### Beispiel 7

### Einfluß von feingemahlenem Zucker auf die physikalischen Eigenschaften und die Brandstrecke

### A-Komponente:

48 Teile amingestartetes Polyetherpolyol OHZ ca. 600, 10000 mPas (20°C)
20 Teile Polyesterpolyol OHZ ca. 300, 6000 mPas (20°C)
7 Teile Glycerin
7 Teile 141b (Firma Solvay)
1 Teil Dimethylethanolamin
0.2 Teile Pentamethyldiethylentriamin
1.0 Teile Schaumstabilisator (Tegostab B 8460 der Firma Goldschmidt)
1.2 Teile Wasser

### Mischungsverhältnis A:B = 100:120

Standardrezeptur siehe Beispiel 6 plus angegebene Teile in der Tabelle:
Raumgewicht 50 g/L
Startzeit ca. 13 sec
Abbindezeit ca. 40 sec
Steigzeit ca. 70 sec
TCPP = Tris(chlorpropyl)phosphat
DEEP = Diethylethylphosphonat
DMMP = Dimethylmethylphosphonat

| Flammschutz/Teile | Zucker/Teile | Druckspannung N/mm² | Brennstrecke cm |
|---|---|---|---|
| TCPP / 20 | 0 | 0,25 | 21 |
| TCPP / 10 | 10 | 0,27 | 21 |
| DEEP / 20 | 0 | 0,23 | 18 |
| DEEP / 10 | 10 | 0,27 | 17 |
| DMMP / 20 | 0 | 0,17 | 15 |
| DMMP / 10 | 10 | 0,27 | 14 |

Die Tabelle zeigt, daß die Brennstrecken von Polyurethanen, in denen 50 % des Flammschutzmittels durch Zucker ersetzt wurden, vergleichbar der von Polyurethanen sind, in denen keine Flammschutzmittel durch Zucker ersetzt wurden. In vorteilhafter Weise sind jedoch die erfindungsgemäßen Polyurethane mit dem teilweisen Ersatz des Flammschutzmittels durch Zucker billiger herzustellen und ungiftig.

## Patentansprüche

1. Verfahren zur Herstellung eines Polyurethans aus einer Polyol-Komponente, einer Isocyanat-Komponente und einer Kohlenhydratkomponente, wobei die Kohlenhydratkomponente in eine fein vermahlene Form mit einer durchschnittlichen Korngröße von <50 µm überführt, die Kohlenhydratkomponente unter Bildung einer Suspension in eine Träger-Komponente eingebracht und anschließend mit den übrigen Komponenten zur Herstellung des Polyurethans vermischt wird.

2. Verfahren nach Anspruch 1, wobei die Träger-Komponente ein organisches Medium ist.

3. Verfahren nach Anspruch 1 oder 2, wobei in dem Verfahren zur Herstellung eines Polyurethans neben der Polyol-Komponente, der Isocyanat-Komponente und der Kohlenhydratkomponente zusätzlich ein Flammschutzmittel verwendet wird.

4. Verfahren nach Anspruch 3, wobei die Kohlenhydratkomponente als teilweiser Ersatz für das Flammschutzmittel eingesetzt wird.

5. Verfahren nach einem der vorhergehenden Ansprüche, wobei die Kohlenhydratkomponente zur Herstellung der fein vermahlenen Form vor Vermischen mit den weiteren Komponenten zur Herstellung des Polyurethans trocken vermahlen wird.

6. Verfahren nach Anspruch 5, wobei die Kohlenhydratkomponente nach dem Trockenvermahlen in dem organischen Medium, insbesondere dem Flammschutzmittel, der Polyol- oder der Isocyanat-Komponente suspendiert wird.

7. Verfahren nach einem der Ansprüche 1 bis 4, wobei die Kohlenhydratkomponente in die fein vermahlene Form überführt und in eine Suspension einer Träger-Komponente, insbesondere ein organisches Medium, eingebracht wird, indem die Kohlenhydratkomponente naß in der Träger-Komponente vermahlen wird.

8. Verfahren nach Anspruch 7, wobei die Kohlenhydratkomponente in einem organischen Medium, insbesondere dem Flammschutzmittel, der Polyol- oder der Isocyanat-Komponente, naß vermahlen wird.

9. Verfahren nach einem der vorhergehenden Ansprüche, wobei der Polyol-Komponente vor, nach oder während dem gegebenenfalls erfolgten Zugeben der Kohlenhydratkomponente und vor dem Mischen mit der Isocyanat-Komponente ein Katalysator, ein Flammschutzmittel, Wasser, ein Treibmittel, ein Kettenverlängerungsmittel, ein Vernetzungsmittel, ein Füllstoff und/oder ein Treibmittel zugegeben wird.

10. Verfahren nach einem der vorhergehenden Ansprüche, wobei die Kohlenhydratkomponente Glucose, Fructose, Puderzucker, Saccharose, Inulin, Stärke, Zuckeralkohol, Sorbit oder abgebaute Cellulose ist.

11. Verfahren nach einem der vorhergehenden Ansprüche, wobei die Kohlenhydratkomponente ein etwa äquimolares Gemisch von 1,1-GPM (1-0-α-D-Glucopyranosyl-D-mannit) und 1,6-GPS (6-0-α-D-Glucopyranosyl-D-sorbit) ist.

12. Verfahren nach einem der vorhergehenden Ansprüche, wobei die Kohlenhydratkomponente ein Gemisch aus 1,1-GPM, 1,6-GPS und 1,1-GPS (1-O-α-D-Glucopyranosyl-D-sorbit) ist.

13. Verfahren nach einem der vorhergehenden Ansprüche, wobei die Kohlenhydratkomponente in Form eines wasserreduzierten Fondants verwendet wird.

14. Verfahren nach einem der vorhergehenden Ansprüche, wobei die zur Herstellung des Polyurethans miteinander vermischten Komponenten zur Herstellung eines Formteils reaktionsgegossen beziehungsweise geschäumt werden.

15. Polyurethan, hergestellt nach einem der Verfahren der vorhergehenden Ansprüche.

16. Polyurethan nach Anspruch 15, wobei das Polyurethan ein nicht-zelliges oder mikrozelluläres Polyurethan ist.

17. Formteil aus einem oder mehreren der Polyurethane der Ansprüche 15 oder 16.

18. Formteil nach Anspruch 17, wobei dieses ein Schaumteil, insbesondere ein Blockschaum, Blockhartschaum, Blochweichschaum, Hartschaum-, Weichschaum-, Halbhartschaum- oder Integralschaumteil ist.

19. Formteil aus einem oder mehreren der Polyurethane der Ansprüche 15 oder 16, wobei dieses eine Matratze, ein Filterschaumsystem, eine Laminatplatte, eine Preßplatte oder eine Hartplatte ist.

20. Klebstoff, enthaltend eines oder mehrere der Polyurethane nach einem der Ansprüche 15 oder 16.

21. Gießharz, enthaltend eines oder mehrere der Polyurethane nach einem der Ansprüche 15 oder 16.

## Claims

1. Method for producing a polyurethane from a polyol component, an isocyanate component and a carbohydrate component, according to which said carbohydrate component is converted into a finely ground form having an average grain size of < 50 micrometers, said carbohydrate component is added to a carrier component, forming a suspension, and then mixed with the remaining components in order to produce said polyurethane.

2. Method according to claim 1, wherein said carrier component is an organic medium.

3. Method according to claim 1 or 2, wherein a flame retardant is used in addition to said polyol component, said isocyanate component and said carbohydrate component in order to produce polyurethane.

4. Method according to claim 3, wherein said carbohydrate component is used as a partial replacement for said flame retardant.

5. Method according to one of the preceding claims, wherein said carbohydrate component used to produce said finely ground form is subjected to dry grinding before being mixed with the other components to produce said polyurethane.

6. Method according to claim 5, wherein, following dry grinding, said carbohydrate component is suspended in the organic medium, in particular in said flame retardant, polyol or isocyanate component.

7. Method according to one of the claims 1 to 4, wherein said carbohydrate component is converted into said finely ground form and is added to a suspension of a carrier component, particularly of an organic medium, by subjecting said carbohydrate component to wet grinding in the carrier component.

8. Method according to claim 7, wherein said carbohydrate component is subjected to wet grinding in an organic medium, in particular in said flame retardant, polyol or isocyanate component.

9. Method according to one of the preceding claims, wherein a catalyst, a flame retardant, water, a blowing agent, a chain extender, a cross linking agent, a filler and/or a blowing agent are added to said polyol component before, after or at the same point in time when said carbohydrate component is optionally added and before mixing with said isocyanate component.

10. Method according to one of the preceding claims, wherein said carbohydrate component is glucose, fructose, powdered sugar, sucrose, inulin, starch, sugar alcohol, sorbitol or hydrolysed cellulose.

11. Method according to one of the preceding claims, wherein said carbohydrate component is an approximately equimolar mixture of 1,1-GPM (1-0-α-D-glucopyranosyl-D-mannitol) and 1,6-GPS (6-0-α-D-glucopyranosyl-D-sorbitol).

12. Method according to one of the preceding claims, wherein said carbohydrate component is a mixture of 1,1-GPM, 1,6-GPS and 1,1-GPS (1-0-α-D-glucopyranosyl-D-sorbitol).

13. Method according to one of the preceding claims, wherein said carbohydrate component is used in the form of a fondant with reduced water content.

14. Method according to one of the preceding claims, wherein said components which are mixed to produce said polyurethane are made to react in a mould and are foamed respectively in order to produce a moulded part.

15. Polyurethane produced according to the method described in one of the preceding claims.

16. Polyurethane according to claim 15, wherein said polyurethane is a non-cellular or microcellular polyurethane.

17. Moulded part made of one or more of the polyurethanes described in claim 15 or 16.

18. Moulded part according to claim 17, wherein said part is a foam part, especially a block foam, rigid block foam, flexible block foam, rigid foam, flexible foam, semi-rigid foam or integral foam part.

19. Moulded part made of one or more of the polyurethanes described in claims 15 or 16, wherein said part is a mattress, a foam filter system, a laminated plate, a press board or a hard board.

20. Adhesive containing one or more of the polyurethanes described in claim 15 or 16.

21. Casting resin containing one or more of the polyurethanes described in claim 15 or 16.

## Revendications

1. Procédé pour la fabrication d'un polyuréthane composé d'un composant polyol, d'un composant isocyanate et d'un composant hydrate de carbone, **caractérisé en ce que** le composant hydrate de carbone est finement moulu pour le transformer en grains d'une taille moyenne de <50 µm, que le composant hydrate de carbone est introduit, en formant une suspension, dans un composant porteur et puis mélangé avec les autres composants pour fabriquer ainsi le polyuréthane.

2. Procédé selon la revendication 1, **caractérisé en ce que** le composant porteur est un médium organique.

3. Procédé selon l'une des revendications 1 et 2, **caractérisé en ce qu'**on utilise en dehors du composant polyol, du composant isocyanate et du composant hydrate de carbone un produit d'ignifugation dans le procédé de fabrication d'un polyuréthane.

4. Procédé selon la revendication 3, **caractérisé en ce que** le composant hydrate de carbone est utilisé comme produit de remplacement partiel pour le produit d'ignifugation.

5. Procédé selon l'une des revendications précédentes, **caractérisé en ce que** le composant hydrate de carbone est moulu à sec pour le transformer en grains finement moulus avant de le mélanger avec les autres composants pour fabriquer le polyuréthane.

6. Procédé selon la revendication 5, **caractérisé en ce que** le composant hydrate de carbone, après le moulage à sec, est suspendu dans le médium organique, notamment le produit d'ignifugation, le composant polyol ou le composant isocyanate.

7. Procédé selon l'une des revendications 1 à 4, **caractérisé en ce que** le composant hydrate de carbone est transformé en grains finement moulus et introduit dans une suspension d'un composant porteur, notamment un médium organique, en moulant le composant hydrate de carbone dans le composant porteur par voie humide.

8. Procédé selon la revendication 7, **caractérisé en ce que** le composant hydrate de carbone est moulu dans un médium organique, notamment le produit d'ignifugation, le composant polyol ou le composant isocyanate, par voie humide.

9. Procédé selon l'une des revendications précédentes, **caractérisé en ce qu'**au composant polyol est ajouté avant, après ou, le cas échéant, pendant l'addition du composant hydrate de carbone et avant le mélange avec le composant isocyanate un catalyseur, un produit d'ignifugation, de l'eau, un produit moussant, un agent susceptible d'allonger la chaîne, un agent de réticulation, une matière de charge et/ou un produit moussant.

10. Procédé selon l'une des revendications précédentes, **caractérisé en ce que** le composant hydrate de carbone est glucose, fructose, sucre glace, saccharose, inuline, amidon, sucre-alcool, sorbitol ou cellulose dégradée.

11. Procédé selon l'une des revendications précédentes, **caractérisé en ce que** le composant hydrate de carbone est un mélange approximativement équimolaire de 1,1-GPM (1-O-α-D-glucopyranosyle-D-mannitol) et 1,6-GPS (6-O-α-D-glucopyranosyle-D-sorbitol).

12. Procédé selon l'une des revendications précédentes, **caractérisé en ce que** le composant hydrate de carbone est un mélange de 1,1-GPM, 1,6-GPS et 1,1-GPS (1-O-α-D-glucopyranosyle-D-sorbitol).

13. Procédé selon l'une des revendications précédentes, **caractérisé en ce que** le composant hydrate de carbone est utilisé sous forme d'un fondant réduit en eau.

14. Procédé selon l'une des revendications précédentes, **caractérisé en ce que** les composés mélangés en vue de fabriquer le polyuréthane sont soumis à un processus de moulage par réaction ou de moussage pour produire une pièce moulée.

15. Polyuréthane, fabriqué selon l'un des procédés des revendications précédentes.

16. Polyuréthane selon la revendication 15, **caractérisé en ce que** le polyuréthane est un polyuréthane non-cellulaire ou micro-cellulaire.

17. Pièce moulée composée de l'une ou plusieurs des polyuréthanes des revendications 15 ou 16.

18. Pièce moulée selon la revendication 17, **caractérisé en ce que** ladite pièce moulée est une pièce en mousse, notamment une mousse en bloc, une mousse en bloc rigide, une mousse en bloc souple, une pièce en mousse rigide, une pièce en mousse souple, une pièce en mousse semi-rigide ou une pièce en mousse intégrale.

19. Pièce moulée composée de l'une ou plusieurs des polyuréthanes des revendications 15 ou 16, **caractérisé en ce que** ladite pièce moulée est un matelas, un système filtre-mousse, un panneau stratifié, un panneau de serrage ou un panneau dur.

20. Colle comprenant l'une ou plusieurs des polyuréthanes selon l'une des revendications 15 ou 16.

21. Résine de coulée comprenant l'une ou plusieurs des polyuréthanes selon l'une des revendications 15 ou 16.
